(19) Europäisches Patentamt
European Patent Office
Office européen des brevets

(11) **EP 3 051 185 B1**

(12) **EUROPEAN PATENT SPECIFICATION**

(45) Date of publication and mention
of the grant of the patent:
**02.01.2019 Bulletin 2019/01**

(51) Int Cl.:
***F16J 15/10*** *(2006.01)*     ***F01N 3/28*** *(2006.01)*

(21) Application number: **14847133.7**

(22) Date of filing: **07.08.2014**

(86) International application number:
**PCT/JP2014/070871**

(87) International publication number:
**WO 2015/045638 (02.04.2015 Gazette 2015/13)**

(54) **METHOD FOR PRODUCING A HOLDING SEALING MATERIAL**

VERFAHREN ZUR HERSTELLUNG EINES HALTEDICHTUNGSMATERIALS

PROCEDE DE PRODUCTION D'UN MATERIAU DE JOINT D'ETANCHEITE DE SUPPORT

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **24.09.2013 JP 2013197539**

(43) Date of publication of application:
**03.08.2016 Bulletin 2016/31**

(73) Proprietor: **Ibiden Co., Ltd.
Gifu 503-8604 (JP)**

(72) Inventors:
• **KUMANO Keiji
Takahama-shi
Aichi 444-1301 (JP)**
• **OKABE Takahiko
Takahama-shi
Aichi 444-1301 (JP)**

(74) Representative: **Kuhnen & Wacker
Patent- und Rechtsanwaltsbüro PartG mbB
Prinz-Ludwig-Straße 40A
85354 Freising (DE)**

(56) References cited:
**EP-A1- 2 594 758     EP-A1- 2 985 435
WO-A1-2012/106295     JP-A- 2001 192 271
JP-A- 2006 342 774     JP-A- 2008 045 521**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

TECHNICAL FIELD

The present invention relates to a method for producing a holding sealing material.

TECHNICAL FIELD

Exhaust gas discharged from internal combustion engines (e.g., diesel engines) contains particulates such as soot (hereinafter also referred to as "PM"), and adverse effects of PM on the environment and human bodies have been problems. Exhaust gas also contains harmful gas components such as CO, HC, and NOx, and thus has raised concerns regarding effects of such harmful gas components on the environment and human bodies.
Thus, various exhaust gas purification apparatuses that collect PM in exhaust gas or purify harmful gas components have been proposed. Such exhaust gas purification apparatuses include an exhaust gas treating body made of porous ceramic such as silicon carbide or cordierite, a casing for housing the exhaust gas treating body, and a holding sealing material made of an inorganic fiber aggregate and arranged between the exhaust gas treating body and the casing. The holding sealing material is arranged mainly for preventing the exhaust gas treating body from being damaged by contact with the casing that covers the periphery of the exhaust gas treating body due to vibrations and impacts caused by traveling or the like of the automobile, and for preventing exhaust gas from leaking from a space between the exhaust gas treating body and the casing. Thus, the holding sealing material is required to have a function to reliably hold the exhaust gas treating body by increasing the contact pressure produced by repulsion upon compression. In addition, it is known that inorganic fibers constituting the holding sealing material are ruptured and scattered in the air when the exhaust gas treating body is housed into the casing. Such scattering of inorganic fibers in the air adversely affects the health of workers handling the holding sealing material.
In order to solve the above problem, a holding sealing material including a mat formed from an inorganic fiber material in which aggregates consisting of an organic binder and inorganic particles are impregnated has been known (for example, see Patent Literature 1). Moreover, in the prior art, a holding sealing material is known comprising an inorganic fiber and a binding agent layer wherein a surface of the inorganic fiber being covered with the binding agent layer, and the binding agent layer comprising an organic binding agent, inorganic particles, and a polymer-based dispersant (see Patent Literature 2).

CITATION LIST

- Patent Literature

    Patent Literature 1: JP-A 2012-157809
    Patent Literature 2: EP 2 985 435 A1

SUMMARY OF INVENTION

- Technical Problem

The contact pressure of the holding sealing material is derived from elasticity when the inorganic fibers constituting the holding sealing material are subjected to stress. Thus, the contact pressure of the holding sealing material increases when the friction between the inorganic fibers is large or when the inorganic fibers are bonded to each other.
In the holding sealing material disclosed in Patent Literature 1, aggregates are attached only to some of the inorganic fibers constituting the mat. Thus, scattering of fibers cannot be suppressed in portions in which aggregates are not attached. Further, since no inorganic particles are present in portions where the organic binder has been burned off by high-temperature exhaust gas, the friction between the inorganic fibers is small and the effect of increasing the contact pressure has been insufficient. Thus, the holding sealing material disclosed in Patent Literature 1 has room for improvement to increase the contact pressure after firing.
The present invention aims to provide a method for producing a holding sealing material capable of maintaining sufficient holding force between the mat and the metal casing even after the use of the exhaust gas purification apparatus.

- Solution to Problem

The problem is solved by the subject-matter as defined in the claims. To solve these problems, the present invention provides a method for producing a holding sealing material including coated fibers including inorganic fibers having a surface coated with a binder layer,
wherein the binder layer contains an organic binder and an inorganic binder, and
the coefficient of coated fiber diameter variation d of the coated fibers is 25% or less as measured using an image taken with a scanning electron microscope at a magnification of 1000 times and expressed by the following formula (1):

$$\texttt{Coefficient of coated fiber diameter variation d (\%) = [(D_{max} - D_{min})/D]}$$

$$\texttt{× 100 (1)}$$

where d is the coefficient of coated fiber diameter variation of the coated fibers, $D_{max}$ is the average maximum diameter of the coated fibers, $D_{min}$ is the average minimum diameter of the coated fibers, and D is a reference diameter that is the average of the average maximum diameter $D_{max}$ and the average minimum diameter $D_{min}$.

In the holding sealing material produced according to the present invention, the coefficient of coated fiber diameter variation d (hereinafter also referred to as the "coefficient of variation d") of the coated fibers is 25% or less as measured using an image taken with a scanning electron microscope (hereinafter also referred to as "SEM") at a magnification of 1000 times and expressed by the above formula (1).

The coefficient of variation d is determined by the following procedure from an image of the coated fibers taken with a SEM at a magnification of 1000 times . First, the maximum diameter and the minimum diameter are determined for each of 30 coated fibers in the SEM image at a magnification of 1000 times. Herein, a diameter of a portion with a largest diameter is determined as the maximum diameter, and a diameter of a portion with a smallest diameter is determined as the minimum diameter. Next, the average of the maximum diameters of the coated fibers is determined as the average maximum diameter $D_{max}$, and the average of the minimum diameters is determined as the average minimum diameter $D_{min}$. Lastly, a reference diameter D that is the average of the average maximum diameter $D_{max}$ and the average minimum diameter $D_{min}$ is determined.

The coefficient of coated fiber diameter variation d in the coated fibers is determined using the above values and the following formula (1) :

$$\texttt{Coefficient of coated fiber diameter variation d (\%) = [(D_{max} - D_{min})/D]}$$

$$\texttt{× 100 (1)}$$

where d is the coefficient of coated fiber diameter variation of the coated fibers, $D_{max}$ is the average maximum diameter of the coated fibers, $D_{min}$ is the average minimum diameter of the coated fibers, and D is a reference diameter that is the average of the average maximum diameter $D_{max}$ and the average minimum diameter $D_{min}$.

The coefficient of coated fiber diameter variation d in the holding sealing material produced according to the present invention is determined by trisecting the holding sealing material in the thickness direction into an upper portion, a middle portion, and a bottom portion and using 10 coated fibers from each portion. Specifically, the coefficient of coated fiber diameter variation d is determined from the average maximum diameter $D_{max}$ that is the average of the maximum diameters of a total of 30 coated fibers, and the average minimum diameter $D_{min}$ that is the average of the minimum diameters of the 30 coated fibers.

For determination of the maximum diameter and the minimum diameter of each coated fiber, portions where the maximum diameter and the minimum diameter are measured do not necessarily have to be coated with the binder layer. In other words, even if the portion where the coated fiber is the thinnest is not coated with the binder layer, the width of the portion shall be measured as the minimum diameter of the coated fiber. In addition, in the case where the inorganic fibers are bonded to each other via the binder layer, such a bonded portion shall not be regarded as a portion having the maximum diameter or the minimum diameter. It is possible to determine how uniformly the binder layer that is formed to coat the surface of each inorganic fiber is distributed by measuring the maximum diameter and the minimum diameter in the manner described above.

When the coefficient of coated fiber diameter variation d is larger, the coated fiber diameter varies more significantly in one coated fiber. This indicates that only a portion of the coated fiber is coated with a large amount of the binder layer. In contrast, when the coefficient of coated fiber diameter variation d is smaller, the coated fiber diameter is almost consistent in one coated fiber. This indicates that the surface of each inorganic fiber is uniformly coated with the binder layer.

Herein, the coated fibers in which the coefficient of coated fiber diameter variation d is 25% or less may be expressed as inorganic fibers in which the surface is uniformly coated with the binder layer.

In the holding sealing material produced according to the present invention, the coefficient of variation d is 25% or less so that the surface of each inorganic fiber constituting the holding sealing material is considered to be uniformly coated with the binder layer containing the organic binder and the inorganic binder. Thus, even if the inorganic fibers are fractured, scattering of the inorganic fibers can be prevented regardless of the portion of fracture because each inorganic fiber is fixed via the binder layer that coats the surface of the inorganic fiber. Thus, the holding sealing material produced according to the present invention can more effectively suppress scattering of the inorganic fibers.

In addition, in the holding sealing material produced according to the present invention, the surface of each inorganic fiber is uniformly coated with the binder layer. Thus, the inorganic fibers are substantially free from portions in which the binder is not attached. Thus, scattering of the fibers can be effectively suppressed. Further, since the inorganic particles are present in the portions where the organic binder has been burned off by high-temperature exhaust gas, the friction between the inorganic fibers increases and the effect of increasing the contact pressure is sufficiently exhibited.

Further, the holding sealing material produced according to the present invention exhibits the effect even after being wound around an exhaust gas treating body and press-fitted into a metal casing. In the holding sealing material produced according to the present invention, the organic binder component in the binder layer that uniformly coats the surface of each inorganic fiber is decomposed upon exposure to the heat of exhaust gas. Once the organic binder component in the binder layer is decomposed, the inorganic particles as the inorganic binder remaining on the surface of each inorganic fiber will form depressions and projections. These depressions and projections which result from the inorganic particles as the inorganic binder contained in the binder layer will be formed on the entire surface of the inorganic fibers . Thus, since the depressions and the projections resulting from the inorganic particles as the inorganic binder provide frictional resistance between the inorganic fibers, the inorganic fibers are still strongly entangled with each other even after introduction of exhaust gas, allowing for an increase in the contact pressure of the holding sealing material.

In the holding sealing material produced according to the present invention, preferably, inorganic particles as the inorganic binder are dispersed in a polymer resin component as the organic binder.

The above structure allows for an increase in the strength of the binder layer while maintaining the flexibility of the mat, thus facilitating the prevention of scattering of the inorganic fibers.

In the holding sealing material produced according to the present invention, preferably, the coated fibers have an average coated fiber diameter of 1 to 20 μm.

The coated fibers having an average coated fiber diameter in the above range are suitably used as the holding sealing material produced according to the present invention because properties such as bulk density and contact pressure can be easily adjusted.

In the holding sealing material produced according to the present invention, preferably, the binder layer further contains a polymeric dispersant and a surface tension adjusting agent.

As the binder layer further contains a polymeric dispersant, the inorganic particles as the inorganic binder can be easily dispersed in the polymer resin component as the organic binder, allowing for an increase in the coating strength of the binder layer.

In addition, as the binder layer further contains a surface tension adjusting agent, the amount of the binder layer to be formed on the surface of each inorganic fiber can be easily adjusted.

In the holding sealing material produced according to the present invention, preferably, the polymeric dispersant is an anionic polymeric dispersant.

If the polymeric dispersant is an anionic polymeric dispersant, the anionic polymeric dispersant will facilitate dispersion of the inorganic particles in the polymer resin component as the organic binder even when the surface of the inorganic particles as the inorganic binder is positively charged, because the electric charge on the surface of the inorganic particles as the inorganic binder will be compensated.

In the holding sealing material produced according to the present invention, the surface tension adjusting agent is a nonionic surfactant.

The binder layer is formed by applying a binder solution as a raw material to the mat. At this point, if a surface tension adjusting agent is contained in the binder solution, the surface tension of the binder solution will be adjusted. Consequently, the amount of formation of the binder layer can be easily adjusted. If the surface tension adjusting agent is a nonionic surfactant, the nonionic surfactant will facilitate suitable adjustment of the surface tension of the binder solution without affecting the dispersing ability of the inorganic binder and the organic binder.

In the holding sealing material produced according to the present invention, preferably, the polymer resin component as the organic binder has a polar group. The polar group is not particularly limited. Yet, in view of compatibility between the organic binder and the inorganic particles as the inorganic binder, the polymer resin component may have a polar group such as a carboxyl, carbonyl, aldehyde, hydroxy, nitrile, ether, thiol, or amino group. Examples of the polymer resin component having a polar group include acrylic resins, carboxymethyl cellulose, polyvinyl alcohol, epoxy resins, polyvinyl acetate, polyether, polythiol, and polyamine. Among these, acrylic resins are particularly preferred. In particular, in the case where the polymer resin component as the organic binder and the polymeric dispersant have the same functional group, the compatibility between the polymer resin component as the organic binder and the polymeric dispersant can be easily increased in the binder layer. This makes it possible to reinforce the bond at the interface between the inorganic particles as the inorganic binder and the polymer resin component as the organic binder, facilitating an increase in the strength of the binder layer.

In the holding sealing material produced according to the present invention, preferably, the binder layer has a coating strength of 5.0 MPa or more.

If the coating strength of the binder layer is 5.0 MPa or more, separation of the binder layer and slipping of the inorganic fibers due to contact between the inorganic fibers are less likely to occur. This strengthens entanglement between the inorganic fibers, and facilitates an increase in the contact pressure.

In the holding sealing material produced according to the present invention, preferably, the proportion of the inorganic particles as the inorganic binder in the binder layer is 20 to 60% by volume relative to the total volume of the binder layer.

If the proportion of the inorganic particles as the inorganic binder in the binder layer is 20 to 60% by volume relative to the total volume of the binder layer, the strength of the binder layer can be easily increased. Thus, separation of the binder layer and slipping of the inorganic fibers due to contact between the inorganic fibers are less likely to occur, facilitating an increase in the contact pressure.

In the holding sealing material produced according to the present invention, preferably, the polymer resin component as the organic binder has a glass-transition temperature of -5°C or lower.

If the glass-transition temperature of the polymer resin component as the organic binder is -5°C or lower, the binder layer tends to be highly strong and highly elastic. Thus, the holding sealing material will have a high flexibility as a whole and can be easily wound around the exhaust gas treating body.

The method of the present invention for producing the holding sealing material includes the steps of: preparing a mat containing inorganic fibers; preparing a binder solution by forming a mixture of an inorganic binder solution and a polymeric dispersant and then mixing the mixture with an organic binder dispersed in water; applying the binder solution to the mat; and drying the mat to which the binder solution was applied so as to form a binder layer on the surface of the inorganic fibers.

In the method according to the present invention for producing the holding sealing material, a polymeric dispersant is used when mixing an inorganic binder solution and an organic binder solution. Thus, the inorganic particles as the inorganic binder will be dispersed in the polymer resin component as the organic binder within the binder layer to be formed on the surface of the inorganic fibers. Thus, the binder layer will be widely formed on the entire surface of the inorganic fibers, and the coating strength of the binder layer will be high. Thus, the method for producing the holding sealing material is suitable as a method for producing the holding sealing material of the present invention.

In the method for producing the holding sealing material of the present invention, the polymeric dispersant is an anionic polymeric dispersant.

In the method according to the present invention for producing the holding sealing material, preferably, the polymeric dispersant in the binder solution has a concentration of 50 to 1000 ppm. If the concentration of the polymeric dispersant is less than 50 ppm, it will be difficult to suppress aggregation of the inorganic particles as the inorganic binder and the polymer resin component as the organic binder in the binder solution. If the concentration is more than 1000 ppm, the effect of dispersing the inorganic particles as the inorganic binder in the polymer resin component as the organic binder will remain the same so that the addition of an excess amount of the polymeric dispersant is not preferred.

In the method according to the present invention for producing the holding sealing material, in the step of preparing a binder solution, a binder solution is prepared by forming a mixture of the inorganic binder solution, the polymeric dispersant, and a surface tension adjusting agent, and then mixing the mixture with an organic binder dispersed in water.

In the step of preparing a binder solution, the inorganic binder solution, the polymeric dispersant, and the surface tension adjusting agent are mixed together so as to reduce the surface tension of the binder solution, thus reducing the thickness variation of the binder layer to be formed on the surface of the inorganic fibers.

In the method according to the present invention for producing the holding sealing material, the surface tension adjusting agent is a nonionic surfactant. If the surface tension adjusting agent is a nonionic surfactant, the nonionic surfactant will facilitate a reduction in the surface tension of the binder solution.

In the method according to the present invention for producing the holding sealing material, preferably, the surface tension adjusting agent in the binder solution has a concentration of 10 to 500 ppm. If the concentration of the surface tension adjusting agent is less than 10 ppm, the effect of reducing the surface tension of the binder solution will be insufficient, and the thickness variation of the binder layer to be formed on the surface of each inorganic fiber may not be sufficiently reduced. If the concentration is more than 500 ppm, the effect of reducing the thickness variation of the binder layer to be formed on the surface of each inorganic fiber will remain the same so that the addition of an excess amount of the surface tension adjusting agent is not preferred.

An exhaust gas purification apparatus includes a metal casing; an exhaust gas treating body housed in the metal casing; and a holding sealing material wound around the exhaust gas treating body and arranged between the exhaust gas treating body and the metal casing, wherein the holding sealing material is the holding sealing material produced according to the present invention.

The exhaust gas purification apparatus includes the holding sealing material produced according to the present invention. Thus, scattering of the inorganic fibers can be prevented during the course of production, and the exhaust gas treating body can be stably held because the contact pressure is maintained at a high level even after introduction of exhaust gas.

BRIEF DESCRIPTION OF DRAWINGS

Fig. 1(a) is a schematic perspective view of an example of a coated fiber constituting the holding sealing material produced according to the present invention. Fig. 1(b) is a cross-sectional view of the coated fiber illustrated in Fig. 1(a) taken along line A-A.

Fig. 2 is a schematic view of an example of a coated fiber constituting the holding sealing material produced according to the present invention, as shown in an image taken with a scanning electron microscope (hereinafter also referred to as "SEM") at a magnification of 1000 times.

Fig. 3 is an example of a SEM image of the coated fibers constituting the holding sealing material produced according to the present invention taken at a magnification of 1000 times.

Fig. 4 is a schematic perspective view of an example of the holding sealing material produced according to the present invention.

Fig. 5(a) is a schematic side view of an example of a measuring device for measuring scattering properties of the inorganic fibers . Fig. 5(b) is a schematic plan view of a portion of a sample support arm constituting the measuring device for measuring scattering properties of the inorganic fibers.

Fig. 6 is a schematic cross-sectional view of an example of the exhaust gas purification apparatus.

Fig. 7 is a schematic perspective view of an example of the exhaust gas treating body constituting the exhaust gas purification apparatus.

Fig. 8 is a schematic perspective view of an example of the exhaust gas purification apparatus.

Fig. 9(a) is a SEM image of coated fibers constituting a holding sealing material according to Comparative Example 1 taken at a magnification of 1000 times. Fig. 9(b) a SEM image of coated fibers constituting a holding sealing material according to Comparative Example 3 taken at a magnification of 1000 times.

DESCRIPTION OF EMBODIMENTS

The holding sealing material produced according to the present invention is described in detail below. The present invention is not limited to the structures described below, and suitable modifications may be made without departing from the scope of the present invention. The present invention also encompasses a combination of two or more preferred structures of the present invention described below.

The holding sealing material produced according to the present invention is described below.

The holding sealing material produced according to the present invention is a holding sealing material including coated fibers including inorganic fibers having a surface coated with a binder layer, wherein the binder layer contains an organic binder and an inorganic binder, and the coefficient of coated fiber diameter variation d of the coated fibers is 25% or less as measured using an image taken with a scanning electron microscope at a magnification of 1000 times and expressed by the following formula (1):

$$\text{Coefficient of coated fiber diameter variation d (\%)} = [(D_{max} - D_{min})/D] \times 100 \quad (1)$$

where d is the coefficient of coated fiber diameter variation of the coated fibers, $D_{max}$ is the average maximum diameter of the coated fibers, $D_{min}$ is the average minimum diameter of the coated fibers, and D is a reference diameter that is the average of the average maximum diameter $D_{max}$ and the average minimum diameter $D_{min}$.

First, the coated fibers constituting the holding sealing material produced according to the present invention are described.

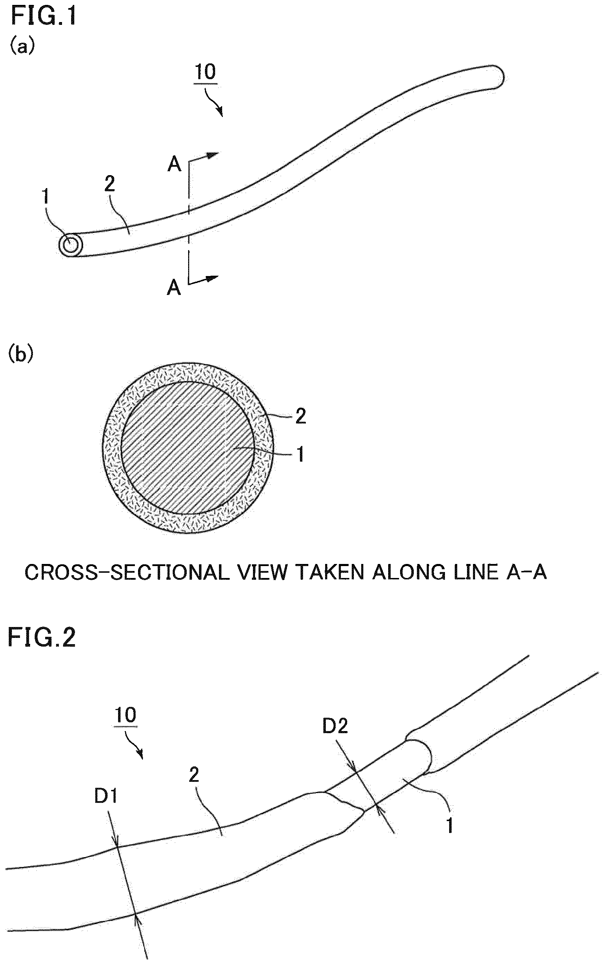

Fig. 1(a) is a schematic perspective view of an example of a coated fiber constituting the holding sealing material produced according to the present invention. Fig. 1(b) is a cross-sectional view of the coated fiber illustrated in Fig. 1(a) taken along line A-A.

As illustrated in Fig. 1(a) and Fig. 1(b), each coated fiber 10 constituting the holding sealing material produced according to the present invention includes an inorganic fiber 1 having a surface coated with a binder layer 2 containing an organic binder and an inorganic binder.

Preferably, the polymer resin component as the organic binder has a polar group. The polar group is not particularly limited. Yet, in view of compatibility between the organic binder and the inorganic particles as the inorganic binder, the polymer resin component may have a polar group such as a carboxyl, carbonyl, aldehyde, hydroxy, nitrile, ether, thiol, or amino group. Examples of the polymer resin component having a polar group include acrylic resins, carboxymethyl cellulose, polyvinyl alcohol, epoxy resins, polyvinyl acetate, polyether, polythiol, and polyamine. In particular, in the case where the polymer resin component as the organic binder and the polymeric dispersant have the same functional group, the compatibility between the organic binder and the polymeric dispersant can be easily increased in the binder layer. This makes it possible to reinforce the bond at the interface between the inorganic particles as the inorganic binder and the polymer resin component as the organic binder, facilitating an increase in the strength of the binder layer.

The amount of the organic binder in terms of solids content relative to 100 parts by weight of the holding sealing material is preferably 0.1 to 10 parts by weight, more preferably 0.1 to 3 parts by weight, still more preferably 0.1 to 2 parts by weight.

If the amount of the organic binder relative to 100 parts by weight of the holding sealing material is less than 0.1 parts by weight, the effect of suppressing scattering of the inorganic fibers will be reduced. If the amount is more than 10 parts by weight, the effect of increasing the contact pressure will remain substantially the same, and the amount of decomposed gas generated by heat of exhaust gas will be large, which may adversely affect the surrounding environment. Thus, it is preferred that the amount of the organic binder be as small as possible. The amount is preferably 10 parts by weight or less, more preferably 3 parts by weight or less, still more preferably 2 parts by weight or less.

The glass-transition temperature of the polymer resin component as the organic binder is preferably -5°C or lower, more preferably -10°C or lower, still more preferably -30°C or lower. If the glass-transition temperature of the polymer resin component as the organic binder is -5°C or lower, the resulting holding sealing material will have a high degree of coating elongation and excellent flexibility while increasing the coating strength of the binder layer. Thus, the holding sealing material will be less likely to be broken, for example, when the holding sealing material is wound around the exhaust gas treating body.

In addition, since the binder layer will not be too hard, scattering of the inorganic fibers can be suppressed.

The inorganic binder is not particularly limited, and examples include an alumina sol and a silica sol. The inorganic particles as the inorganic binder are preferably alumina particles derived from an alumina sol and silica particles derived from a silica sol.

The amount of the inorganic particles as the inorganic binder relative to 100 parts by weight of the holding sealing material is preferably 0.1 to 10 parts by weight, more preferably 0.1 to 3 parts by weight, still more preferably 0.1 to 2 parts by weight.

If the amount of the inorganic particles as the inorganic binder is less than 0.1 parts by weight relative to relative to 100 parts by weight of the holding sealing material, the effect of increasing the contact pressure tends to be small due to an insufficient amount of the inorganic particles as the inorganic binder. If the amount is more than 10 parts by weight, although the effect of increasing the contact pressure will remain substantially the same, the binder layer may become too hard, making it difficult to suppress scattering of the inorganic fibers. Thus, in order to sufficiently suppress scattering of the inorganic fibers, the amount of the inorganic particles as the inorganic binder is preferably 0.1 to 3 parts by weight relative to 100 parts by weight of the holding sealing material produced according to the present invention.

Although the particle diameter of the inorganic particles as the inorganic binder is not particularly limited, the average particle diameter is preferably 0.005 to 0.1 $\mu$m.

The proportion of the inorganic particles as the inorganic binder in the binder layer is preferably 20 to 60% by volume relative to the total volume of the binder layer. If the proportion of the inorganic particles as the inorganic binder is in the above range, the coating strength of the binder layer can be easily increased. Thus, separation of the binder layer and slipping of the inorganic fibers due to contact between the inorganic fibers are less likely to occur, facilitating an increase in the contact pressure.

Within the binder layer, preferably, the inorganic particles as the inorganic binder are dispersed in the polymer resin component as the organic binder.

The inorganic particles as the inorganic binder being dispersed in the polymer resin component as the organic binder facilitates an increase in the coating strength of the binder layer. This strengthens entanglement between the inorganic fibers, thus contributing to an increase in the contact pressure.

Preferably, the coating strength of the binder layer is 5.0 MPa or more. If the coating strength of the binder layer is 5.0 MPa or more, separation of the binder layer and slipping of the inorganic fibers upon contact between the fibers contact are less likely to occur, thus facilitating an increase in the contact pressure.

The coating strength of the binder layer is the tensile strength at break of a dumbbell-shaped test piece having a thickness of 0.4 mm produced from the binder layer, as measured by a tension test at a speed of 300 mm/min at room temperature using an Instron tensile tester.

The test piece can be produced by pouring the binder solution as a raw material of the binder layer into a polypropylene resin plate having a frame, and leaving the binder solution at room temperature to be dried into a film.

In the holding sealing material produced according to the present invention, the coefficient of coated fiber diameter variation d of the coated fibers is 25% or less as measured using an image taken with a scanning electron microscope at a magnification of 1000 times and expressed by the following formula (1):

$$\text{Coefficient of coated fiber diameter variation d (\%) } = [(D_{max} - D_{min})/D] \times 100 \quad (1)$$

where d is the coefficient of coated fiber diameter variation of the coated fibers, $D_{max}$ is the average maximum diameter of the coated fibers, $D_{min}$ is the average minimum diameter of the coated fibers, and D is a reference diameter that is the average of the average maximum diameter $D_{max}$ and the average minimum diameter $D_{min}$.

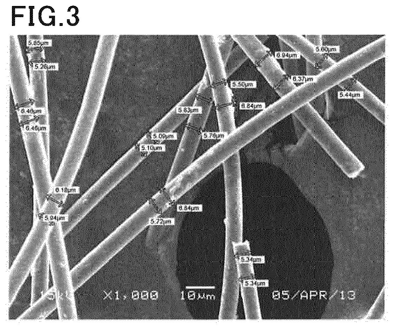

The coefficient of coated fiber diameter variation d in the holding sealing material produced according to the present invention is described with reference to Fig. 2 and Fig. 3.

Fig. 2 is a schematic view of an example of a coated fiber constituting the holding sealing material produced according to the present invention, as shown in an image taken with a SEM at a magnification of 1000 times.

When one coated fiber is examined as illustrated in Fig. 2, the coated fiber 10 includes, on the surface of the inorganic fiber 1, a portion where the binder layer 2 is thickly formed, a portion where the binder layer 2 is thinly formed, and a portion where the binder layer is not formed. The diameter of the coated fiber 10 varies to some degree. For each coated fiber shown in the SEM image at a magnification of 1000 times, a portion with the largest width (a portion having a width indicated by two arrows D1 in Fig. 2) is considered to be the largest diameter portion, and its width is regarded as the maximum diameter of the coated fiber 10. Likewise, a portion with the narrowest width (a portion having a width indicated by two arrows D2 in Fig. 2) is considered to be the smallest diameter portion, and its width is regarded as the minimum diameter of the coated fiber 10.

In Fig. 2, although the binder layer 2 is not formed on the portion where the diameter of the coated fiber 10 is the smallest (D2), D2 shall be regarded as the minimum diameter of the coated fiber 10. In addition, in the case where some of the inorganic fibers 1 are bonded to each other via the binder layer 2, such a bonded portion shall not be regarded as a portion having the maximum diameter or the minimum diameter.

In the holding sealing material produced according to the present invention, the coefficient of coated fiber diameter variation d is determined by trisecting the holding sealing material in the thickness direction into an upper portion, a middle portion, and a bottom portion and using 10 coated fibers from each portion, i.e., a total of 30 coated fibers. It is also possible to determine the coefficient of coated fiber diameter variation in each of the trisected portions, i.e., the upper portion, the middle portion, and the bottom portion, of the holding sealing material in the thickness direction.

In the holding sealing material produced according to the present invention, preferably, all of the coefficients of coated fiber diameter variation $d_U$, $d_M$, and $d_B$ respectively measured in the trisected portions, i.e., the upper portion, the middle portion, and the bottom portion, of the holding sealing material in the thickness direction using 30 coated fibers from each portion are 25% or less.

Fig. 3 is an example of a SEM image of the coated fibers constituting the holding sealing material produced according to the present invention taken at a magnification of 1000 times.

As shown in Fig. 3, the coefficient of coated fiber diameter variation d of the coated fibers constituting the holding sealing material produced according to the present invention is determined from a SEM image taken at a magnification of 1000 times.

The method for measuring the maximum diameter and the minimum diameter of each coated fiber is not particularly limited. For example, commercially available image processing software can be used.

The maximum diameter and the minimum diameter of the coated fiber 10 are measured by the method described above so as to determine the coefficient of coated fiber diameter variation d. In this manner, it is possible to determine how non-uniformly the binder layer 2 included in each coated fiber 10 is formed.

When the coefficient of coated fiber diameter variation d is larger, the coated fiber diameter varies more significantly in one coated fiber. This indicates that the binder layer 2 is non-uniformly formed on the inorganic fiber 1.

If the coefficient of coated fiber diameter variation d is 25% or less, the surface of the inorganic fiber 1 is considered to be uniformly coated with the binder layer 2. Thus, even if the inorganic fibers 1 are fractured, scattering of the inorganic fibers can be prevented regardless of the portion of fracture because each inorganic fiber 1 is fixed via the binder layer 2 that coats the surface of the inorganic fiber 1.

Thus, the holding sealing material produced according to the present invention can effectively suppress scattering of the inorganic fibers.

Preferably, the coated fibers constituting the holding sealing material produced according to the present invention has an average coated fiber diameter of 1 to 20 $\mu$m. The average coated fiber diameter is the average of coated fiber diameters (30 coated fibers) in the SEM image at a magnification of 1000 times.

The value of the average coated fiber diameter may be different from the values of the average maximum diameter $D_{max}$, the average minimum diameter $D_{min}$, and the reference diameter D which are used to determine the coefficient of coated fiber diameter variation d.

As for the inorganic fibers constituting the holding sealing material produced according to the present invention, any inorganic fibers may be used. Preferably, the inorganic fibers include at least one selected from the group consisting of alumina fibers, silica fibers, alumina-silica fibers, mullite fibers, biosoluble fibers, and glass fibers.

The inorganic fibers including at least one selected from the group consisting of alumina fibers, silica fibers, alumina-silica fibers, and mullite fibers have excellent heat resistance. Thus, even when the exhaust gas treating body is exposed to a sufficiently high temperature, the function of the holding sealing material can be sufficiently maintained without being deteriorated or the like. In the case where the inorganic fibers are biosoluble fibers, there is no damage to the health of workers even if the workers inhale scattered inorganic fibers during production of an exhaust gas purification apparatus using the holding sealing material because the biosoluble fibers will be dissolved in the body.

Alumina fibers may contain additives such as calcia, magnesia, and zirconia, in addition to alumina.

The ratio of the components of the alumina-silica fibers by weight is preferably $Al_2O_3:SiO_2$ = 60:40 to 80:20, more preferably $Al_2O_3:SiO_2$ = 70:30 to 74:26.

The mat constituting the holding sealing material can be produced by various methods such as needling method or papermaking method.

The average fiber length of the inorganic fibers constituting a mat produced by the needling method is preferably 1 to 150 mm, more preferably 10 to 80 mm.

Inorganic fibers having an average fiber length of less than 1 mm are too short, resulting in insufficient entangling of the inorganic fibers. Thus, the holding sealing material will be poorly wound around an exhaust gas treating body and susceptible to cracking. Inorganic fibers having an average fiber length of more than 150 mm are too long, resulting in a low density mat due to a smaller number of fibers constituting the holding sealing material. Consequently, the shear strength of the holding sealing material will decrease.

The average fiber length of the inorganic fibers constituting a mat produced by the papermaking method is preferably 0.1 to 20 mm.

Inorganic fibers having an average fiber length of less than 0.1 mm are too short and thus the fibers will not be suitably entangled with each other, failing to achieve a sufficient contact pressure. Inorganic fibers having an average fiber length of more than 20 mm are too long and thus too strongly entangled with each other in a slurry solution obtained by dispersing the inorganic fibers in water during a papermaking step. Thus, the fibers tend to accumulate unevenly while being molded into the form of a mat.

In the holding sealing material produced according to the present invention, the binder layer preferably contains a polymeric dispersant.

If the binder layer contains a polymeric dispersant, the inorganic particles as the inorganic binder can be easily dispersed in the polymer resin component as the organic binder. This facilitates an increase in the coating strength of the binder layer and a decrease in the coefficient of coated fiber diameter variation d. As a result, scattering of the inorganic fibers can be easily prevented.

The number average molecular weight of the polymeric dispersant is not particularly limited, but it is preferably 500 to 100000. The number average molecular weight of the polymeric dispersant can be calculated, for example, from molecular weight measurement by gel permeation chromatography (GPC).

Dispersion of the polymer resin component as the organic binder and the inorganic particles as the inorganic binder in the binder layer can be confirmed by transmission electron microscope (hereinafter also referred to as "TEM"). The organic binder mainly containing carbon atoms has a low electron density and easily allows electron beams to pass therethrough, compared to the inorganic binder containing alumina, silica, and the like. Thus, in a TEM image, the polymer resin component as the organic binder is lighter in color than the inorganic particles as the inorganic binder.

The kind of the polymeric dispersant is not particularly limited. Examples include hydrophilic synthetic polymers typified by anionic polymeric dispersants such as polycarboxylic acids and/or salts thereof, naphthalene sulfonate formaldehyde condensates and/or salts thereof, polyacrylic acids and/or salts thereof, polymethacrylic acids and/or salts thereof, and polyvinylsulfonic acids and/or salts thereof; natural hydrophilic polymers such as gelatin, casein, and water soluble starch; and hydrophilic semisynthetic polymers such as carboxymethyl cellulose.

Among these, hydrophilic synthetic polymers are preferred, and anionic polymeric dispersants are more preferred. For example, in the case where the inorganic particles as the inorganic binder are alumina particles derived from an alumina sol, the surface of the alumina particles becomes cationic in a dispersion. Thus, anionic polymeric dispersant tends to be adsorbed onto the alumina particles by electrostatic attraction. Further, in the case where the polymeric dispersant has a functional group having polarity, preferably, the polymer resin component as the organic binder also has the same functional group as in the polymeric dispersant. In the case where the polymer resin component as the organic binder and the polymeric dispersant have the same functional group, the compatibility between the organic binder and the polymeric dispersant can be easily increased in the binder layer. This makes it possible to reinforce the bond at the interface between the inorganic particles as the inorganic binder and the polymer resin component as the organic binder, facilitating an increase in the strength of the binder layer.

Each of these polymeric dispersants may be used alone or in combination of two or more thereof.

The polymeric dispersant is particularly preferably an anionic polymeric dispersant having a number average molecular weight of 500 to 100000.

The number average molecular weight of the anionic polymeric dispersant can be calculated, for example, from molecular weight measurement by gel permeation chromatography (GPC).

The amount of the polymeric dispersant is preferably 50 to 1000 ppm relative to the weight of the inorganic fibers constituting the holding sealing material. If the amount of the polymeric dispersant is less than 50 ppm relative to the weight of the inorganic fibers, it will be difficult to suppress aggregation of the inorganic particles as the inorganic binder and the polymer resin component as the organic binder in the binder solution. If the amount is more than 1000 ppm, the effect of dispersing the inorganic particles as the inorganic binder in the polymer resin component as the organic binder will remain the same so that the addition of an excess amount of the polymeric dispersant is not preferred.

In the holding sealing material produced according to the present invention, preferably, the binder layer further contains a surface tension adjusting agent. The surface tension adjusting agent can reduce the surface tension of the binder solution during formation of the binder layer. Thus, the wettability of the surface of each inorganic fiber inside the holding sealing material will improve, allowing the binder solution to easily penetrate through the entire inorganic fiber. Thus, the thickness variation of the binder layer to be formed on the surface of each inorganic fiber will be further reduced.

The surface tension adjusting agent is not particularly limited as long as no aggregates are formed in the binder solution or the binder layer. Yet, use of a nonionic surfactant and an anionic surfactant is preferred, and use of a nonionic surfactant is more preferred. Nonionic surfactants such as ester, ether, ester-ether, alkanolamide, and alkyl glucoside nonionic surfactants can be used. Examples include glycerol fatty acid ester, sorbitan fatty acid ester, polyoxyethylene alkyl ether, polyvinyl alcohol, polyvinylpyrrolidone, and polyethylene glycol. These many be used in combination of two or more thereof as long as no aggregates are formed in the binder solution or the binder layer.

Preferably, the amount of surface tension adjusting agent is 10 to 500 ppm relative to the amount of the inorganic fibers constituting the holding sealing material. If the amount of the surface tension adjusting agent is less than 10 ppm relative to the weight of the inorganic fibers, the wettability of the surface of the inorganic fibers inside the holding sealing material may not be sufficiently improved. Thus, the thickness variation of the binder layer to be formed on the surface of each inorganic fiber may not be sufficiently suppressed. If the amount is more than 500 ppm, the effect of reducing the thickness variation of the binder layer to be formed on the surface of each inorganic fiber will remain the same so that the addition of an excess amount of the surface tension adjusting agent is not preferred.

In the holding sealing material produced according to the present invention, preferably, depressions and projections resulting from the inorganic particles as the inorganic binder are formed on the entire surface of each inorganic fiber when the organic binder is burned off by the heat.

If depressions and projections resulting from the inorganic particles as the inorganic binder are formed on the entire surface of each inorganic fiber when the organic binder is burned off by the heat, the frictional resistance between the inorganic fibers when these inorganic fibers contact with each other will increase after the organic binder is burned off by the heat. This prevents slipping on the surface of each inorganic fiber, thus facilitating an increase in the contact pressure.

Herein, when the organic binder is burned off by the heat, the organic binder is heated at 600°C for one hour in the air unless otherwise specified.

The shape of the holding sealing material produced according to the present invention is described.

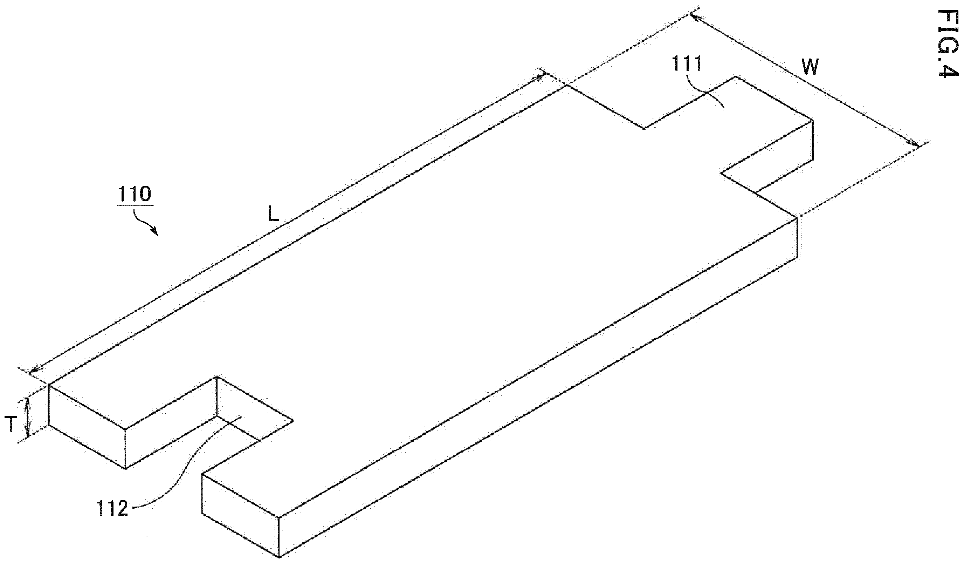

Fig. 4 is a schematic perspective view of an example of the holding sealing material produced according to the present invention. As illustrated in Fig. 4, the holding sealing material produced according to the present invention may include a tabular mat that is generally rectangular in a plan view, the mat having predetermined length (hereinafter indicated by an arrow L in Fig. 4), width (indicated by an arrow W in Fig. 4), and thickness (indicated by an arrow T in Fig. 4).

A holding sealing material 110 illustrated in Fig. 4 includes a projecting portion 111 on one end and a recessed portion 112 on the other end in the longitudinal direction of the holding sealing material 110. The projecting portion 111 and the recessed portion 112 of the holding sealing material are formed to fit each other when the holding sealing material is wound around an exhaust gas treating body to assemble an exhaust gas purification apparatus (described later).

The term "generally rectangular in a plan view" is a concept that includes the projecting portion and the recessed portion. The term "generally rectangular in a plan view" also includes a shape having a corner with an angle other than 90°.

The holding sealing material produced according to the present invention is preferably needle-punched. The inorganic fibers are entangled by needle punching, which strengthens entanglement between the inorganic fibers, facilitating an increase in the contact pressure.

Needle punching can be performed using a needle punching device. The needle punching device includes a support plate for supporting a sheet of an inorganic fiber precursor, and a needle board disposed above the support plate and capable of moving back and forth in the punching direction (thickness direction of a base mat). A large number of needles are attached to the needle board. The needle board is moved relative to the sheet of the inorganic fiber precursor placed on the support plate, and the large number of needles are pushed in and out of the sheet of the inorganic fiber precursor. Thus, the fibers constituting the inorganic fiber precursor can be complicatedly entangled. The number of times to perform needle punching may be changed according to the target bulk density and the target basis weight.

The thickness of the holding sealing material is not particularly limited, but it is preferably 2.0 to 20 mm. If the thickness of the holding sealing material is more than 20 mm, the holding sealing material will lose its flexibility and thus be difficult to handle at the time of being wound around the exhaust gas treating body. The holding sealing material will also be susceptible to winding wrinkles and cracking.

If the thickness of the holding sealing material is less than 2.0 mm, the contact pressure of the holding sealing material will be insufficient to hold the exhaust gas treating body. The reason is that the metal casing has a higher coefficient of thermal expansion than the exhaust gas treating body made of porous ceramic, and a holding sealing material having a thickness of less than 2.0 mm cannot easily absorb an increase in the gap between the exhaust gas treating body and the metal casing caused by the heat of exhaust gas. Thus, the exhaust gas treating body will easily come off.

The contact pressure of the holding sealing material produced according to the present invention can be measured by the following method using a contact pressure measuring device.

For measurement of the contact pressure, a contact pressure measuring device provided with a heater at a plate portion where the mat is compressed is used to compress a sample to a bulk density (GBD) of 0.3 g/cm$^3$ at room temperature. Then, the compressed state is maintained for 10 minutes. The bulk density of the sample is a value determined by "bulk density = sample weight/(sample area $\times$ sample thickness)".

Next, with the sample in the compressed state, the temperature on one side of the sample is increased to 900°C and the temperature on the other side is increased to 650°C at a temperature increase rate of 40°C/min. Meanwhile, the compression is released until the bulk density reaches 0.273 g/cm$^3$. Then, the sample is maintained for five minutes with the temperature on one side at 900°C, the temperature on the other side at 650°C, and the bulk density at 0.273 g/cm$^3$.

Subsequently, the sample is compressed until the bulk density reaches 0.3 g/cm$^3$ at a rate of 1 inch (25.4 mm) /min. The load at a bulk density of 0.273 g/cm$^3$ is determined after repeating 1000 cycles of release of compression to a bulk density of 0.273 g/cm$^3$ and compression to a bulk density of 0.3 g/cm$^3$. The load determined is divided by the sample area so as to determine the contact pressure (kPa) which is regarded as the contact pressure after firing.

The scattering properties of the inorganic fibers constituting the holding sealing material produced according to the present invention can be determined by the following procedure.

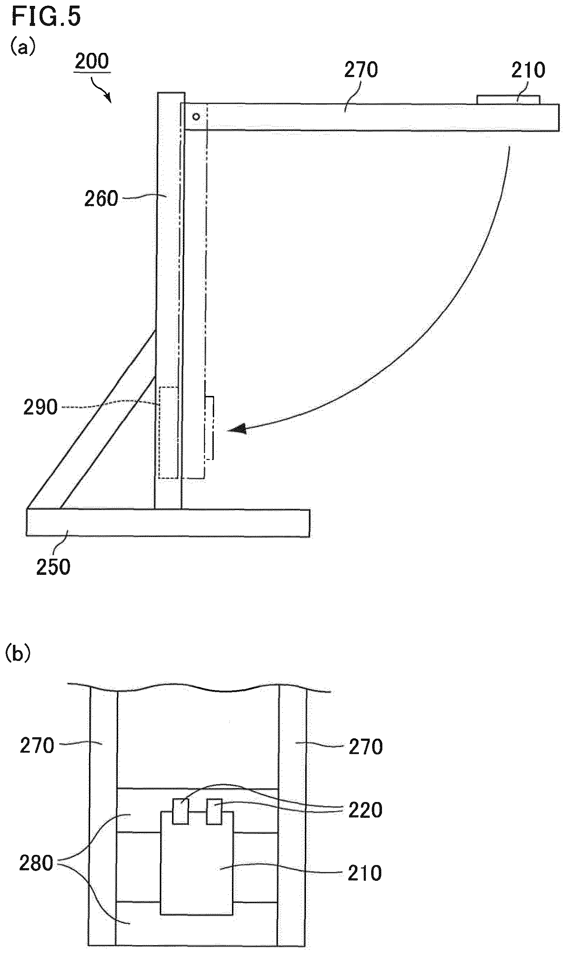

First, the holding sealing material is cut into a size of 100 mm $\times$ 100 mm to obtain a scattering test sample 210. The inorganic fiber scattering rate of the scattering test sample can be determined using a measuring device shown in Fig. 5(a) and Fig. 5(b).

Fig. 5(a) is a schematic side view of an example of a measuring device for measuring scattering properties of the inorganic fibers. Fig. 5(b) is a schematic plan view of a portion of a sample support arm constituting the measuring device for measuring scattering properties of the inorganic fibers. As illustrated in Fig. 5(a), a test device 200 includes a sample support arm 270 which is connected to an upper end portion of each of two supports 260 provided vertically on a base 250 in such a manner that these sample support arms 270 are rotatable within a predetermined range. Further, a vertical wall member 290 is fixed between the two supports 260 at a position where the sample support arms 270 can be collided with the vertical wall member 290.

In addition, as illustrated in Fig. 5(b), the other end of each sample support arm 270 is fixed by a sample fixing member 280 through which the ends of the sample support arms 270 are connected to each other. Another sample fixing member 280 is located at a predetermined distance in the direction of the support 260 away from the sample fixing member 280 connected to the ends of the sample support arm 270. Thus, the two sample support arms 270 are connected to each other at least at two portions through the sample fixing members 280.

The sample support arms 270 are locked by a predetermined locking mechanism at a position where the angle between each sample support arm 270 and the support 260 is 90°, and the scattering test sample 210 is fixed to the sample fixing members 280 with clips 220. Once the sample support arms 270 are unlocked, the sample support arms 270 and the scattering test sample 210 start descending toward the base 250 on which the support 260 is fixed, and the sample support arms 270 and the scattering test sample 210 change their orientations by rotating about the joint between the sample support arm 270 and the support 260. The sample support arm 270 is collided with the vertical wall member 290 at the point when the sample support arm 270 is parallel to the support 260. The inorganic fibers constituting the scattering test sample 210 are partially fractured and scattered by the collision. Thus, the fiber scattering rate can be determined by measuring the weight of the scattering test sample before and after collision and using the following formula (2):

$$\text{Fiber scattering rate (\% by weight)} = (\text{weight of scattering test sample before testing} - \text{weight of scattering test sample after testing})/(\text{weight of scattering test sample before testing}) \times 100 \quad (2).$$

The basis weight (weight per unit area) of the holding sealing material produced according to the present invention is not particularly limited, but it is preferably 200 to 4000 $g/m^2$, more preferably 1000 to 3000 $g/m^2$. If the basis weight of the holding sealing material is less than 200 $g/m^2$, the holding force will be insufficient; whereas if the basis weight of the holding sealing material is more than 4000 $g/m^2$, it will be difficult to reduce the bulk of the holding sealing material, and the holding sealing material will be too thick. Thus, holding sealing material will lose its flexibility and will be difficult to handle at the time of being wound around the exhaust gas treating body. The holding sealing material will also be susceptible to winding wrinkles and cracking.

The bulk density of the holding sealing material produced according to the present invention (bulk density of the holding sealing material before being wound) is also not particularly limited, but it is preferably 0.10 to 0.30 $g/cm^3$. If the bulk density of the holding sealing material is less than 0.10 $g/cm^3$, it will be difficult to maintain the shape of the holding sealing material in a predetermined shape because the inorganic fibers that are loosely entangled are easily separated.

A holding sealing material having a bulk density of more than 0.30 $g/cm^3$ is rigid so that it is poorly wound around the exhaust gas treating body and susceptible to cracking.

The holding sealing material produced according to the present invention may further contain an expansive agent. The expansive agent is preferably one that expands in the range of 400°C to 800°C.

If the holding sealing material contains an expansive agent, the holding sealing material will expand in the range of 400°C to 800°C. Thus, the holding force of the holding sealing material can be increased even in a high temperature range above 700°C in which a decrease in the strength of glass fibers occurs.

Examples of expansive agents include vermiculite, bentonite, phlogopite, pearlite, expandable graphite, and expandable fluorophlogopite. These expansive agents may be used alone or in combination of two or more thereof.

The amount of the expansive agent to be added is not particularly limited, but it is preferably 10 to 50% by weight, more preferably 20 to 30% by weight, relative to the total weight of the holding sealing material.

In the case where the holding sealing material produced according to the present invention is used as a holding sealing material of an exhaust gas purification apparatus, the number of holding sealing materials constituting the exhaust gas purification apparatus is not particularly limited. One holding sealing material may be used or multiple holding sealing materials connected to each other may be used. The method for connecting multiple holding sealing material is not particularly limited. For example, the holding sealing materials may be connected to each other by sewing with a sewing machine or may be adhered to each other by an adhesive tape or an adhesive.

Next, the method according to the present invention for producing the holding sealing material is described.

The method for producing the holding sealing material is suitable as a method for producing the holding sealing material.

The method according to the present invention for producing the holding sealing material includes the steps of: preparing a mat containing inorganic fibers;
preparing a binder solution by forming a mixture of an inorganic binder solution and a polymeric dispersant and then mixing the mixture with an organic binder dispersed in water; applying the binder solution to the mat; and drying the mat to which the binder solution was applied so as to form a binder layer on the surface of the inorganic fibers.

(a) Mat preparing step

In the method for producing the holding sealing material, first, a mat containing inorganic fibers is prepared.

The mat constituting the holding sealing material can be obtained by various methods. For example, it can be produced by a method such as needling method or papermaking method.

In the case of the needling method, the mat can be produced by the following method, for example. Specifically, first, for example, a spinning mixture formed from raw materials such as an aqueous solution of basic aluminum chloride and silica sol is spun by blowing to produce an inorganic fiber precursor having an average fiber diameter of 3 to 10 $\mu$m. Subsequently, the inorganic fiber precursor is compressed into a continuous sheet having a predetermined size. The continuous sheet is needle-punched, and then fired. Thus, the preparation of a mat is completed.

In the case of the papermaking method, inorganic fibers such as alumina fibers, silica fibers, an inorganic binder, and water are mixed in such a manner that the amount of the inorganic fibers in the raw material solution reaches a predetermined value, followed by stirring with a stirrer. Thus, a mixture is prepared. The mixture may optionally contain a colloidal solution of a high molecular compound or resin. Subsequently, the mixture is poured into a mold having a filtration mesh screen formed on its bottom, and the water in the mixture is removed through the mesh screen. Thus, a raw material sheet is produced. Then, the raw material sheet is thermally compressed under predetermined conditions. Thus, the preparation of a mat is completed.

(b) Binder solution preparing step

Next, a binder solution is prepared by preparing a mixture of the inorganic binder and the polymeric dispersant and then mixing the mixture with the organic binder dispersed in water (i.e., an organic binder solution). The mixture of an inorganic binder and a polymeric dispersant is prepared first so as to allow the surface of the inorganic particles as the inorganic binder to be coated with the polymeric dispersant. The mixture is then mixed with the organic binder dispersed in water so as to allow the inorganic particles as the inorganic binder coated with the polymeric dispersant and the polymer resin component as the organic binder to be dispersed in water.

The inorganic binder solution to be used in the binder solution preparing step of the present invention is not particularly limited, and those mentioned in the description of the holding sealing material produced according to the present invention, such as alumina sol and silica sol, can be used.

In the binder solution preparing step of the present invention, the concentration of the inorganic binder solution is not particularly limited, but it is preferred to use a solution of the inorganic particles as the inorganic binder diluted to a concentration of about 0.2 to 20% by weight in terms of solids content.

In the binder solution preparing step of the present invention, the polymeric dispersant to be mixed with the inorganic binder solution is not particularly limited, and those mentioned in the description of the holding sealing material produced according to the present invention can be used. Thus, a detailed description thereof is omitted. A preferred range of the number average molecular weight is also as described above.

The concentration of the polymeric dispersant in the binder solution to be prepared in the binder solution preparing step of the present invention is not particularly limited, but it is preferably 50 to 1000 ppm. If the concentration of the polymeric dispersant is less than 50 ppm, the amount of the polymeric dispersant will be insufficient, so that it will be difficult to suppress aggregate of the inorganic particles as the inorganic binder and the polymer resin component as the organic binder in the binder solution; whereas if the concentration is more than 1000 ppm, the dispersing effect will remain the same so that the addition of an excess amount of the polymeric dispersant is undesirable.

The organic binder to be used in the binder solution preparing step of the present invention is not particularly limited, and those mentioned in the description of the holding sealing material produced according to the present invention can be used. Thus, a detailed description thereof is omitted.

In the binder solution preparing step of the present invention, the concentration of the organic binder is not particularly limited, but it is preferred to use a solution of the polymer resin component as the organic binder diluted to a concentration of about 0.2 to 20% by weight in terms of solids content.

In the binder solution preparing step of the present invention, the glass-transition temperature of the polymer resin component as the organic binder is not particularly limited, but it is preferably -5°C or lower, more preferably -10°C or lower, still more preferably -30°C or lower.

In the binder solution preparing step of the present invention, the mixing ratio of the mixture of the inorganic binder and the polymeric dispersant to the organic binder solution is not particularly limited, but it is preferred to mix at a mixing ratio by solids weight of the inorganic particles as the inorganic binder in the mixture of the inorganic binder and the polymeric dispersant to the polymer resin component as the organic binder component in the organic binder solution of 3:1 to 1:3.

In the binder solution preparing step of the present invention, a pH adjuster may be added to adjust the pH of the binder solution.

In the binder solution preparing step of the present invention, preferably, a surface tension adjusting agent is added to adjust the surface tension of the binder solution. If a surface tension adjusting agent is added in the binder solution preparing step, the surface tension of the binder solution can be adjusted, which facilitates an efficient removal of an intended amount of water.

In the binder solution preparing step, the timing to add the surface tension adjusting agent is not limited as long as the surface tension adjusting agent is not directly added to the organic binder dispersed in water. For example, the inorganic binder solution, the polymeric dispersant, and the surface tension adjusting agent may be mixed together simultaneously, or the surface tension adjusting agent may be added to the mixture of the inorganic binder solution and the polymeric dispersant. The concentration of the surface tension adjusting agent in the binder solution is not particularly limited, but it is preferably 10 to 500 ppm. If the concentration of the surface tension adjusting agent is less than 10 ppm, the effect of reducing the surface tension of the binder solution will be insufficient, and the thickness variation of the binder layer to be formed on the surface of each inorganic fiber may not be sufficiently reduced. If the concentration is more than 500 ppm, the effect of reducing the thickness variation of the binder layer to be formed on the surface of each inorganic fiber will remain the same so that the addition of an excess amount of the surface tension adjusting agent is not preferred.

The surface tension adjusting agent to be used in the binder solution preparing step of the present invention is not particularly limited. Any of those described in the holding sealing material produced according to the present invention can be used, and the use of a nonionic surfactant is preferred.

(c) Applying step

Next, the binder solution is applied to the mat.

The method for bringing the mat into contact with the binder solution during the applying step is not particularly limited. For example, the binder solution may be applied to the inorganic fibers in the mat by allowing the mat to be impregnated in the binder solution or by dropping the binder solution onto the mat by a method such as curtain coating. Alternatively, the binder solution may be spayed to the mat as in spray coating.

Further, preferably, the mat to which the binder solution was applied is dewatered so as to adjust the amount of the binder solution applied to 50 to 200 parts by weight relative to 100 parts by weight of the inorganic fibers constituting the mat.

(d) Drying step

Subsequently, the mat to which the binder solution was applied is dried at a temperature of about 110°C to 140°C (drying step) so as to dry the organic binder and the inorganic binder to evaporate the solvent in the binder solution. Thus, the holding sealing material produced according to the present invention wherein the organic binder and the inorganic binder are contained in the binder layer can be produced.

Thereafter, the holding sealing material may further be subjected to a cutting step in which the holding sealing material is cut into a predetermined shape to obtain a holding sealing material having a projecting portion and a recessed portion as illustrated in Fig. 4.

In the method for producing the holding sealing material produced according to the present invention, a binder solution prepared by preparing a mixture of the inorganic binder and the polymeric dispersant and then mixing the mixture with the organic binder dispersed in water is applied to the mat containing the inorganic fibers. A mixture of the inorganic binder solution and the polymeric dispersant is prepared first. This allows the surface of the inorganic particles as the inorganic binder to be coated with the polymeric dispersant, and prevents the organic binder and the inorganic particles from aggregating when the mixture is subsequently mixed with the organic binder. The organic binder is also prevented from aggregating due to the effect of the polymeric dispersant. Thus, the binder solution is applied to the entire surface of each inorganic fiber in the applying step, and is turned into a binder layer via the drying step.

The binder layer formed through the steps (a) to (d) contains the organic binder and the inorganic binder, and thus the coating strength of the binder layer is high. Therefore, the holding sealing material produced by the method for producing the holding sealing material produced according to the present invention has a high contact pressure. Further, since the binder layer is formed on the entire surface of each inorganic fiber, even if the inorganic fibers are fractured, scattering of the inorganic fibers can be suppressed regardless of the portion of fracture.

The holding sealing material produced according to the present invention can be used as a holding sealing material of an exhaust gas purification apparatus.

The exhaust gas purification apparatus is described below.

The exhaust gas purification apparatus includes: a metal casing; an exhaust gas treating body housed in the metal casing; and a holding sealing material wound around the exhaust gas treating body and arranged between the exhaust gas treating body and the metal casing, wherein the holding sealing material is the holding sealing material produced according to the present invention.

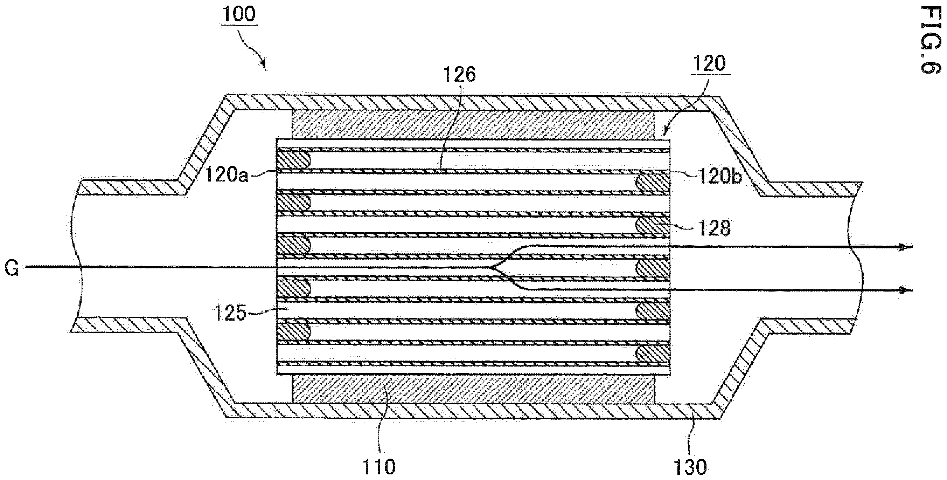

Fig. 6 is a schematic cross-sectional view of an example of the exhaust gas purification apparatus.

As illustrated in Fig. 6, the exhaust gas purification apparatus 100 includes a metal casing 130, an exhaust gas treating body 120 housed in the metal casing 130, and the holding sealing material 110 arranged between the exhaust gas treating body 120 and the metal casing 130.

The exhaust gas treating body 120 has a pillar shape in which a large number of cells 125 are arranged in parallel in a longitudinal direction with a cell wall 126 between each cell. One of the ends of each cell 125 is plugged with a plug material 128. If necessary, an inlet tube for introducing exhaust gas discharged from an internal combustion engine is connected to one end portion of the metal casing 130, and an outlet tube for discharging the exhaust gas that has passed through the exhaust gas purification apparatus to the outside is connected to the other end portion of the metal casing 130.

Passage of exhaust gas through an exhaust gas purification apparatus 100 having the above-described structure is described with reference to Fig. 6.

As illustrated in Fig. 6, exhaust gas discharged from the internal combustion engine into the exhaust gas purification apparatus 100 (in Fig. 6, the exhaust gas is indicated by G, and the flow of exhaust gas is indicated by arrows) flows into one cell 125 that is open at an exhaust gas inlet-side end face 120a of the exhaust gas treating body (i.e., the honeycomb filter) 120, and then passes through the cell wall 126 between each cell 125. At this point, PM in the exhaust gas is collected by the cell wall 126, and the exhaust gas is purified. The purified exhaust gas is discharged to the outside via another cell 125 that is open at an exhaust gas outlet-side end face 120b.

Next, an exhaust gas treating body (honeycomb filter) and a metal casing constituting the exhaust gas purification apparatus are described.

The structure of the holding sealing material constituting the exhaust gas purification apparatus has been described as the holding sealing material produced according to the present invention, and thus the description thereof is omitted.

The material of the metal casing constituting the exhaust gas purification apparatus is not particularly limited as long as it is a heat-resistant metal. Specific examples include metals such as stainless steel, aluminum, and iron.

The casing constituting the exhaust gas purification apparatus can suitably have a shape such as a substantially cylindrical shape, a clam-shell shape, a tubular shape with a substantially elliptical cross section, or a tubular shape with a substantially polygonal cross section.

Subsequently, the exhaust gas treating body constituting the exhaust gas purification apparatus is described.

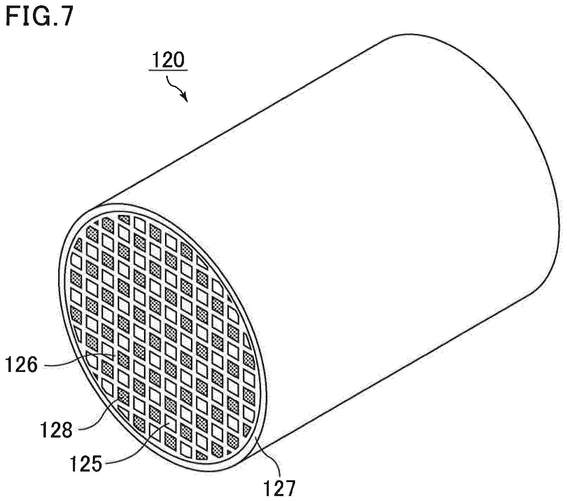

Fig. 7 is a schematic perspective view of an example of the exhaust gas treating body constituting the exhaust gas purification apparatus.

The exhaust gas treating body 120 illustrated in Fig. 7 is a ceramic honeycomb structured body having a pillar shape in which the large number of cells 125 are arranged in parallel in the longitudinal direction with the cell wall 126 between each cell 125. One of the ends of each cell 125 is plugged with the plug material 128. In addition, a peripheral coat layer 127 is provided on the periphery of the honeycomb structured body in order to reinforce the periphery of the honeycomb structured body, arrange the shape, and improve thermal insulating properties of the honeycomb structured body.

In the case where each of the cells 125 is plugged at one end, it is preferred that the end-plugged cells and unplugged cells be alternately arranged when the exhaust gas treating body 120 is viewed from one of the ends.

The cross-sectional shape of the exhaust gas treating body 120 taken along a direction perpendicular to the longitudinal direction is not particularly limited. It may be a substantially circular shape or a substantially elliptical shape. Alternatively, it may be a substantially polygonal shape such as a substantially triangular shape, substantially quadrangular shape, substantially pentagonal shape, or substantially hexagonal shape.

The cross-sectional shape of each cell 125 constituting the exhaust gas treating body 120 may be a substantially polygonal shape such as a substantially triangular shape, substantially quadrangular shape, substantially pentagonal shape, or substantially hexagonal shape. Alternatively, it may be a substantially circular shape or a substantially elliptical shape. The exhaust gas treating body 120 may include a combination of cells having different cross-sectional shapes.

The materials constituting the exhaust gas treating body 120 are not particularly limited. Non-oxide materials such as silicon carbide and silicon nitride, and oxide materials such as cordierite and aluminum titanate can be used. In particular, a porous fired body made of a non-oxide material such as silicon carbide or silicon nitride among the above is preferred.

Porous fired bodies made of these materials are brittle and thus easily breakable by mechanical shock or the like. However, in the case of the exhaust gas purification apparatus, the holding sealing material 110 disposed around the lateral side of the exhaust gas treating body 120 absorbs shock. Thus, the exhaust gas treating body 120 can be prevented from cracking or the like resulting from mechanical shock and thermal shock.

The exhaust gas treating body constituting the exhaust gas purification apparatus may support a catalyst for conversion of exhaust gas. Preferred examples of catalysts to be supported include noble metals such as platinum, palladium, and rhodium. Among these, platinum is more preferred. Examples of other catalysts that can be used include alkali metals such as potassium and sodium and alkaline-earth metals such as barium. These catalysts may be used alone or in combination of two or more thereof. These catalysts being supported facilitates removal of PM by combustion and allow for conversion of toxic exhaust gas.

The exhaust gas treating body constituting the exhaust gas purification apparatus may be an integral honeycomb structured body made of cordierite or the like and integrally formed. Alternatively, the exhaust gas treating body may be an aggregated honeycomb structured body formed by combining a plurality of pillar-shaped honeycomb fired bodies made of silicon carbide or the like via a paste mainly made of ceramic, each honeycomb fired body having a large number of through holes arranged in parallel in the longitudinal direction with a partition wall between each through hole.

In the exhaust gas treating body constituting the exhaust gas purification apparatus, each cell may not be provided with a plug material and thus may not be plugged at one end. In this case, the exhaust gas treating body is used to support a catalyst such as platinum so as to function as a catalyst supporting carrier to convert harmful gas components such as CO, HC, or NOx contained in exhaust gas.

Next, a method according to the present invention for producing the exhaust gas purification apparatus is described.

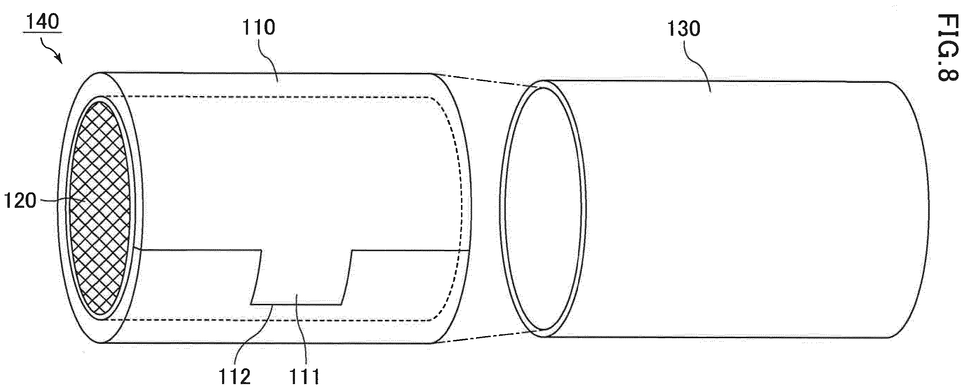

Fig. 8 is a schematic perspective view of an example of the exhaust gas purification apparatus.

The exhaust gas treating body and the holding sealing material constituting the exhaust gas purification apparatus are formed into a wound body 140 by winding the holding sealing material 110 around the exhaust gas treating body 120 as illustrated in Fig. 8. Subsequently, the wound body 140 is housed into the metal casing 130. Thus, the exhaust gas purification apparatus is obtained.

Examples of the method for housing the wound body 140 into the metal casing 130 include a press-fitting method (stuffing method) in which the exhaust gas treating body 120 around which the holding sealing material 110 is wound is press-fitted up to a predetermined position inside the metal casing 130; a sizing method (swaging method) in which the outer periphery of the metal casing 130 is compressed to reduce the inner diameter of the metal casing 130; and a clam-shell method in which the metal casing is formed in a shape that can be separated into a first casing and a second casing, and the wound body 140 is placed on the first casing, which is then covered with the second casing for hermetic sealing.

In the case of housing the wound body in the metal casing by the press-fitting method (stuffing method), preferably, the inner diameter of the metal casing (i.e., the inner diameter of a portion where the exhaust gas treating body is housed) is slightly smaller than the outer diameter of the wound body.

The exhaust gas purification apparatus is produced through these steps.

In the exhaust gas purification apparatus, the holding sealing material of the present invention is arranged between the exhaust gas treating body and the metal casing.

Thus, the holding sealing material can exhibit a high contact pressure and can stably hold the exhaust gas treating body. Further, depressions and projections resulting from the inorganic particles as the inorganic binder are formed on the entire surface of each inorganic fiber when the organic binder in the binder layer is burned off by the heat of exhaust gas. The formation of the depressions and projections resulting from the inorganic particles on the entire surface of each inorganic fiber prevents the fibers from slipping over each other. Thus, a high contact pressure can be maintained, and the exhaust gas treating body can be prevented from being damaged.

Further, even if the inorganic fibers constituting the holding sealing material are fractured, scattering of the inorganic fibers can be suppressed regardless of the portion of fracture.

The effects of the holding sealing material produced according to the present invention, the method for producing the holding sealing material, and the exhaust gas purification apparatus are described below.

(1) In the holding sealing material produced according to the present invention, the surface of each inorganic fiber is coated with the binder layer containing the organic binder and the inorganic binder, and the coefficient of coated fiber diameter variation d of the coated fibers including the inorganic fibers having a surface coated with the binder layer is 25% or less. Thus, the surface of each inorganic fiber is uniformly coated with the binder layer. Thus, the inorganic fibers are substantially free from portions in which the binder is not attached, and scattering of the fibers can be effectively suppressed. Further, since the inorganic particles are present in the portions where the organic binder has been burned off by high-temperature exhaust gas, the friction between the inorganic fibers increases and the effect of increasing the contact pressure is sufficiently exhibited.

(2) According to the method for producing the holding sealing material produced according to the present invention, a holding sealing material having the structure described above can be easily produced.

(3) In the exhaust gas purification apparatus, the holding sealing material is arranged between the exhaust gas treating body and the metal casing so that leakage of exhaust gas can be prevented. Also, the surface of each inorganic fiber constituting the holding sealing material is uniformly coated with the binder layer so that scattering of the inorganic fibers can be suppressed, the contact pressure of the holding sealing material can be maintained at a high level, and the exhaust gas treating body can be stably held.

(4) Further, in the exhaust gas purification apparatus, the binder layer is burnt off, for example, by the flow of exhaust gas into the exhaust gas treating body constituting the exhaust gas purification apparatus. Once the binder layer is burned off, the inorganic particles as the inorganic binder constituting the binder layer are exposed to form depressions and projections which increase the friction between the inorganic fibers. Thus, a decrease in the contact pressure can be suppressed even after exposure to the heat of exhaust gas.

EXAMPLES

Examples that more specifically disclose the present invention are described below, but the present invention is not limited to these examples.

(Example 1)

(a) Mat preparing step

First, a mat containing inorganic fibers was prepared by the following procedure.

(a-1) Spinning step

An aqueous solution of basic aluminum chloride having an Al content of 70 g/l at a ratio of Al:Cl = 1:1.8 (atomic ratio) was prepared. A silica sol was added to the solution in such a manner that the ratio of components in inorganic fibers after firing would be $Al_2O_3$:$SiO_2$ = 72:28 (weight ratio), followed by addition of an appropriate amount of an organic polymer (polyvinyl alcohol). Thus, a mixture was prepared.
The resulting mixture was concentrated into a spinning mixture, and the spinning mixture was spun by blowing. Thus, an inorganic fiber precursor having an average fiber diameter of 5.1 $\mu$m was prepared.

(a-2) Compressing step

The inorganic fiber precursor obtained in step (a-1) above was compressed into a continuous sheet.

(a-3) Needle-punching step

The sheet obtained in step (a-2) above was continuously needle-punched under the following conditions to produce a needle-punched body.
First, a needle board having needles attached thereto at a density of 21 pcs/cm$^2$ was provided. Next, the needle board was set above one of the surfaces of the sheet, and the sheet was needle-punched by allowing the needle board to descend and ascend once in the thickness direction of the sheet. Thus, a needle-punched body was produced. At this point, the needles were allowed to penetrate the sheet until barbs formed on the tips of the needles had completely protruded from the opposite surface.

(a-4) Firing step

The needle-punched body obtained in step (a-3) above was continuously fired at a maximum temperature of 1250°C. Thus, a fired sheet formed form inorganic fiber including alumina and silica at a ratio (part by weight) of 72:28 was produced. The average fiber diameter of the inorganic fibers was 5.1 $\mu$m, and the minimum value was 3.2 $\mu$m. The fired sheet thus obtained had a bulk density of 0.15 g/cm$^3$ and a basis weight of 1500 g/m$^2$.

(a-5) Cutting step

The fired sheet produced in step (a-4) above was cut into a mat containing the inorganic fibers.

(b) Binder solution preparing step

(b-1) Organic binder solution preparing step

Acrylate-type latex formed by dispersing acrylic rubber having a glass-transition temperature of -31°C in water (ZEON corporation, Nipol LX874 (solids concentration: 45% by weight)) was diluted with water. Thus, an organic binder solution having a solids concentration of 2% by weight was prepared.

(b-2) Inorganic binder solution preparing step

An alumina colloidal solution (alumina sol) (Nissan Chemical Industries, Ltd., alumina sol 550 (solids concentration: 15% by weight)) was diluted with water, and an anionic polymeric dispersant (SAN NOPCO Limited, Nopcosant RFA) and a nonionic surfactant (Kao Corporation, EMULGEN 707) was added thereto, followed by sufficient stirring. Thus, an inorganic binder solution was prepared in which the inorganic particles as the inorganic binder had a solids concentration of 2% by weight, the anionic polymeric dispersant had a concentration of 500 ppm, and the nonionic surfactant had a concentration of 100 ppm.

(b-3) Binder solution preparing step

The organic binder solution obtained in step (b-1) above was added to the inorganic binder solution obtained in step (b-2) above at a weight ratio of the inorganic binder solution to the organic binder solution of 1:1, and the mixture was sufficiently stirred. Thus, a binder solution was prepared in which the polymer resin component as the organic binder component had a solids concentration of 1% by weight, the inorganic particles as the inorganic binder had a solids concentration of 1% by weight, the anionic polymeric dispersant had a concentration of 250 ppm, and the nonionic surfactant had a concentration of 50 ppm.

(c) Applying step

The binder solution obtained in the binder solution preparing step (b) above was applied to the mat produced in the mat preparing step (a) by curtain coating.

(d) Drying step

(d-1) Dewatering step

The mat to which the binder solution was applied, which was obtained in the applying step (c) above, was dewatered by suction using dewatering equipment in such a manner that the amount of the binder solution applied would be adjusted to 100 parts by weight relative to 100 parts by weight of the inorganic fibers.

(d-2) Drying step

The mat that underwent the dewatering step (d-1) above was heat-dried by blowing hot air at a temperature of 130°C at an air velocity of 2 m/s. Thus, a holding sealing material was obtained.

(Comparative Example 1)

A holding sealing material was produced in the same manner as in Example 1, except that the inorganic binder solution was prepared without adding the polymeric dispersant or the surface tension adjusting agent in the inorganic binder solution preparing step.

(Comparative Example 2)

A holding sealing material was produced in the same manner as in Example 1, except that the binder solution was prepared without adding the polymeric dispersant or the surface tension adjusting agent in the binder solution preparing step and that acrylate-type latex (ZEON Corporation, Nipol LX811H) formed by dispersing acrylic rubber having a glass-transition temperature of 1°C in water was used as the organic binder.

(Comparative Example 3)

A holding sealing material was produced in the same manner as in Comparative Example 2, except that the inorganic binder was not added in the inorganic binder solution preparing step.

(Measurement of the coefficient of coated fiber diameter variation d)

Each of the holding sealing materials produced in the example and the comparative examples was trisected into an upper portion, a middle portion, and a bottom portion in the thickness direction of the holding sealing material. A scanning electron microscope (JEOL Ltd., JSM-6380A) was used to take an image of the coated fibers constituting each holding sealing material at a magnification of 1000 times. Using 10 coated fibers from each of the upper, middle, and bottom portions (i.e., a total of 30 coated fibers) in the SEM image, the average maximum diameter $D_{max}$ and the average minimum diameter $D_{min}$ were measured to determine the reference diameter D and the coefficient of coated fiber diameter variation d.

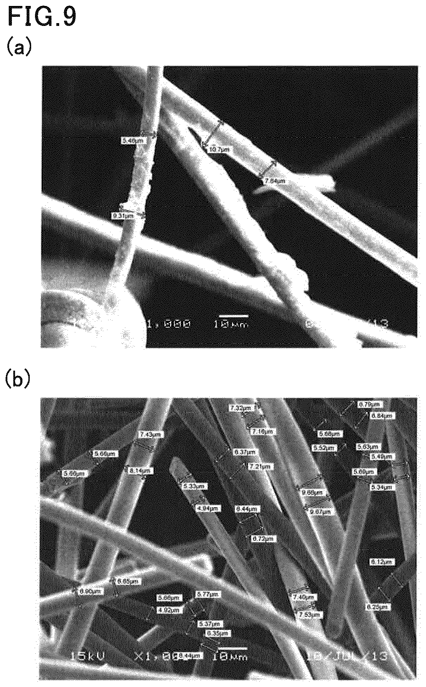

Fig. 3 is an example of a SEM image of the coated fibers constituting the holding sealing material according to Example 1 taken at a magnification of 1000 times. Fig. 9 (a) is a SEM image of the coated fibers constituting the holding sealing material according to Comparative Example 1 taken at a magnification of 1000 times. Fig. 9(b) a SEM image of coated fibers constituting the holding sealing material according to Comparative Example 3 taken at a magnification of 1000 times.

In Example 1 and Comparative Example 3, the coefficient of coated fiber diameter variation d was 25% or less. In contrast, in Comparative Examples 1 and 2, the coefficient of coated fiber diameter variation d was more than 25%. Table 1 shows the results.

(Contact pressure test)

A contact pressure test was carried out for each holding sealing material of the example and the comparative examples.

The method for the contact pressure test using the contact pressure measuring device is as described above in the description of the holding sealing material produced according to the present invention.

Table 1 shows the results.

(Inorganic fiber scattering test)

The holding sealing materials of the example and the comparative examples were used to carry out the inorganic fiber scattering test.

The method for the inorganic fiber scattering test is as described above in the description of the present invention.

Table 1 shows the results.

(Coating strength test of the binder layer)

The binder solutions prepared in the example and the comparative examples were poured into separate glass plates having a frame. These binder solutions were left at room temperature for drying, and the dried products were punched out to produce dumbbell-shaped test pieces each having a thickness of 0.4 mm. These test pieces were used to carry out a tension test at a speed of 300 mm/min using an Instron tensile tester so as to measure the coating strength (tensile strength at break) of the binder layers. Table 1 shows the results.

(State of the binder solution and surface state of the binder layer)

In the coating strength test of the binder layer, the aggregation state of the binder solution and the surface state of the test pieces (coatings) produced were visually observed. As a result, no aggregations were observed in the binder solutions in Example 1 and Comparative Example 3; whereas aggregations were observed in the binder solutions in Comparative Examples 1 and 2.

In addition, the test pieces (coatings) in Example 1 and Comparative Example 3 each had a smooth surface; whereas the test pieces (coatings) in Comparative Examples 1 and 2 each had a surface having innumerable depressions and projections formed thereon, and each of these test pieces had a distorted shape as a whole.

[Table 1]

| | | Example 1 | Comparative Example 1 | Comparative Example 2 | Comparative Example 3 |
|---|---|---|---|---|---|
| Binder layer | Amount of organic binder (% by weight) | 1.0 | 1.0 | 1.0 | 1.0 |
| | Amount of inorganic binder (% by weight) | 1.0 | 1.0 | 1.0 | 0.0 |
| | Amount of polymeric dispersant (ppm) | 250 | 0 | 0 | 0 |
| | Amount of surface tension adjusting agent (ppm) | 50 | 0 | 0 | 0 |
| | Coating strength (MPa) | 10.8 | 2.8 | 3.7 | 1.6 |
| Coated fiber | Average maximum diameter Dmax ($\mu$m) | 6.38 | 10.3 | 8.73 | 7.11 |
| | Average minimum diameter Dmin ($\mu$m) | 5.85 | 5.87 | 6.57 | 6.8 |
| | Reference diameter D ($\mu$m) | 6.12 | 8.08 | 7.65 | 6.96 |
| | Coefficient of coated fiber diameter variation d (%) | 8.7 | 54.8 | 28.2 | 4.5 |
| | Fiber scattering rate (% by weight) | 0.09 | 0.47 | 0.39 | 0.08 |
| | Contact pressure after firing (kPa) | 39 | 27 | 29 | 18 |

As shown in Table 1, the coated fibers constituting the holding sealing material according to Example 1 had a coefficient of coated fiber diameter variation d of below 25%, and the contact pressure after firing was high (above 33 kPa). In addition, the inorganic fiber scattering rate was suppressed to below 0.15% by weight.

In contrast, in Comparative Example 1 and Comparative Example 2, the coefficient of coated fiber diameter variation d was more than 25%. Therefore, the contact pressure was low (below 33 kPa), and the inorganic fiber scattering rate was more than 0.15% by weight. Thus, scattering of the inorganic fibers could not be sufficiently suppressed.

In addition, the holding sealing material according to Comparative Example 3 had a coefficient of coated fiber diameter variation d of below 25%, but the contact pressure was low (below 33 kPa) . The reason is presumably that the separation of the binder layer easily occurred due to contact between the inorganic fibers and the inorganic fibers were not easily entangled with each other, because the absence of the inorganic binder in the binder layer reduced the coating strength of the binder layer.

These results clearly show that the holding sealing material in which the binder layer contains the organic binder and the inorganic binder and the coefficient of coated fiber diameter variation d of the coated fibers is 25% or less exhibits excellent properties in terms of the contact pressure after firing and the suppression of scattering of the inorganic fibers.

REFERENCE SIGNS LIST

1     inorganic fiber
2     binder layer
10    coated fiber
100   exhaust gas purification apparatus
110   holding sealing material
120   exhaust gas treating body
130   metal casing

**Claims**

1. A method for producing a holding sealing material comprising coated fibers including inorganic fibers having a surface coated with a binder layer, the method comprising the steps of:

   preparing a mat containing inorganic fibers;
   preparing a binder solution by forming a mixture of an inorganic binder solution and a polymeric dispersant and then mixing the mixture with an organic binder dispersed in water;
   applying the binder solution to the mat; and
   drying the mat to which the binder solution was applied so as to form a binder layer on the surface of the inorganic fibers;
   wherein in the step of preparing a binder solution, a binder solution is prepared by forming a mixture of the inorganic binder solution, the polymeric dispersant, and a surface tension adjusting agent and then mixing the mixture with the organic binder dispersed in water;
   wherein the polymeric dispersant is an anionic polymeric dispersant; and
   wherein the surface tension adjusting agent is a nonionic surfactant; and
   the coefficient of coated fiber diameter variation d of the coated fibers is 25 % or less as measured using an image taken with a scanning electron microscope at a magnification of 1000 times and expressed by the following formula (1):

   $$\text{Coefficient of coated fiber diameter variation d (\%)} = [(D_{max} - D_{min})/D] \times 100 \ (1);$$

   where d is the coefficient of coated fiber diameter variation of the coated fibers, $D_{max}$ is the average maximum diameter of the coated fibers, $D_{min}$ is the average minimum diameter of the coated fibers, and D is a reference diameter that is the average of the average maximum diameter $D_{max}$ and the average minimum diameter $D_{min}$.

2. The method for producing the holding sealing material according to claim 1,
   wherein the polymeric dispersant in the binder solution has a concentration of 50 to 1000 ppm.

3. The method for producing the holding sealing material according to claim 1 or 2,

wherein the surface tension adjusting agent in the binder solution has a concentration of 10 to 500 ppm.

**Patentansprüche**

1.  Verfahren zum Herstellen eines Haltedichtungsmaterials, das beschichtete Fasern aufweist, die anorganische Fasern mit einer Oberfläche beinhalten, die mit einer Bindemittelschicht beschichtet sind, wobei das Verfahren folgende Schritte beinhaltet:

    Vorbereiten einer Matte, die anorganische Fasern enthält;
    Vorbereiten einer Bindemittellösung, indem ein Gemisch aus einer anorganischen Bindemittellösung und einem polymeren Dispergiermittel gebildet wird und anschließend das Gemisch mit einem organischen Bindemittel, das in Wasser dispergiert worden ist, vermischt wird;
    Auftragen der Bindemittellösung auf die Matte; und
    Trocknen der Matte, auf die die Bindemittellösung aufgetragen wurde, so dass eine Bindemittelschicht auf der Oberflächen der anorganischen Fasern entsteht;
    wobei in dem Schritt des Zubereitens einer Bindemittellösung eine Bindemittellösung zubereitet wird, indem ein Gemisch aus der anorganischen Bindemittellösung, dem polymeren Dispergiermittel und einem Oberflächenspannungsanpassungsmittel gebildet wird, und indem anschließend das Gemisch mit dem in Wasser dispergierten organischen Bindemittel vermischt wird,
    wobei das polymere Dispergiermittel ein anionisches polymeres Dispergiermittel ist; und
    wobei das Oberflächenspannungsanpassungsmittel ein nichtionisches Tensid ist; und
    der Koeffizient einer Variation d eines Durchmessers einer beschichteten Faser von den beschichteten Fasern 25 % oder weniger ist und unter Verwendung einer Bildaufnahme gemessen wird, die mit einem Rasterelektronenmikroskop bei 1000-facher Vergrößerung erstellt wurde, und durch die nachstehende Formel (1) ausgedrückt wird:

    $$\text{Koeffizient einer Variation d eines Durchmessers einer beschichteten Faser (\%) =}$$
    $$[(D_{max} - D_{min}) / D] \times 100 \ (1);$$

    wenn d der Koeffizient einer Variation eines Durchmessers einer beschichteten Faser von den beschichteten Fasern ist, wenn $D_{max}$ der mittlere maximale Durchmesser der beschichteten Fasern ist, $D_{min}$ der mittlere minimale Durchmesser der beschichteten Fasern ist, und D ein Bezugsdurchmesser ist, der der Mittelwert des mittleren maximalen Durchmessers $D_{max}$ und des mittleren minimalen Durchmessers $D_{min}$ ist.

2.  Verfahren zum Herstellen des Haltedichtungsmaterials nach Anspruch 1,
    wobei das polymere Dispergiermittel in der Bindemittellösung eine Konzentration von 50 bis 1000 ppm aufweist.

3.  Verfahren zum Herstellen des Haltedichtungsmaterials nach Anspruch 1 oder 2,
    wobei das Oberflächenspannungsanpassungsmittel in der Bindemittellösung eine Konzentration von 10 bis 500 ppm aufweist.

**Revendications**

1.  Procédé pour produire un matériau d'étanchéité et de retenue comprenant des fibres revêtues incluant des fibres inorganiques ayant une surface revêtue d'une couche de liant, le procédé comprenant les étapes de :

    préparation d'un mat contenant des fibres inorganiques ;
    préparation d'une solution de liant en formant un mélange d'une solution de liant inorganique et d'un dispersant polymère puis en mélangeant le mélange avec un liant organique dispersé dans de l'eau ;
    application de la solution de liant au mat ; et
    séchage du mat auquel la solution de liant a été appliquée de manière à former une couche de liant sur la surface des fibres inorganiques ;
    dans lequel dans l'étape de préparation d'une solution de liant, une solution de liant est préparée en formant un mélange de la solution de liant inorganique, du dispersant polymère, et d'un agent d'ajustement de tension superficielle puis en mélangeant le mélange avec le liant organique dispersé dans de l'eau ;

dans lequel le dispersant polymère est un produit dispersant polymère anionique ; et

dans lequel l'agent d'ajustement de tension superficielle est un tensioactif non ionique ; et

le coefficient de variation de diamètre de fibre revêtue d des fibres revêtues est inférieur ou égal à 25 %, tel que mesuré en utilisant une image prise avec un microscope électronique à balayage selon un grossissement fois 1 000 et exprimé par la formule suivante (1) :

$$\text{coefficient de variation de diamètre de fibre revêtue d } (\%) = [(D_{max} - D_{min})/D] \times 100 \ (1) \ ;$$

où d est le coefficient de variation de diamètre de fibre revêtue des fibres revêtues $D_{max}$ est le diamètre maximal moyen des fibres revêtues, $D_{min}$ est le diamètre minimal moyen des fibres revêtues, et D est un diamètre de référence qui est la moyenne du diamètre maximal moyen $D_{max}$ et du diamètre minimal moyen $D_{min}$.

2. Procédé pour produire le matériau d'étanchéité et de retenue selon la revendication 1, dans lequel le dispersant polymère dans la solution de liant a une concentration de 50 à 1 000 ppm.

3. Procédé pour produire le matériau d'étanchéité et de retenue selon la revendication 1 ou 2, dans lequel l'agent d'ajustement de tension superficielle dans la solution de liant a une concentration de 10 à 500 ppm.

## FIG.1

(a)

(b)

CROSS-SECTIONAL VIEW TAKEN ALONG LINE A-A

## FIG.2

# FIG.3

FIG.4

# FIG.5

(a)

(b)

FIG.6

FIG.7

FIG.8

# FIG.9

(a)

(b)

**EP 3 051 185 B1**

**REFERENCES CITED IN THE DESCRIPTION**

**Patent documents cited in the description**

- JP 2012157809 A

- EP 2985435 A1